# EUROPÄISCHE PATENTSCHRIFT

(11) **EP 0 824 425 B1**
(45) Veröffentlichungstag und Bekanntmachung des Hinweises auf die Patenterteilung: **23.01.2002**
(21) Anmeldenummer: 97903363.6
(22) Anmeldetag: 23.02.1997
(51) Int. Cl.: B60S 1/34

(54) **SCHEIBENWISCHERANLAGE**
WINDSCREEN-WIPER ARRANGEMENT
SYSTEME D'ESSUIE-GLACE

(30) Priorität: 28.02.1996 DE 19607535
(43) Veröffentlichungstag der Anmeldung: 25.02.1998
(73) Patentinhaber: Krupp Presta Aktiengesellschaft, 9492 Eschen (LI)
(72) Erfinder: KRÄTTLI, Christian, CH-7204 Untervaz (CH); KUNZ, Markus, CH-7302 Landquart (CH)
(74) Vertreter: Torggler, Paul Norbert, Dr.
(86) Internationale Anmeldenummer: EP9700870
(87) Internationale Veröffentlichungsnummer: WO9731808

(56) Entgegenhaltungen:
- EP-A- 0 508 841
- WO-A-90/11209
- DE-B- 1 039 380
- US-A- 3 648 323

## Beschreibung

Die Erfindung betrifft eine Scheibenwischeranlage mit einem schwenkbaren Wischerarm und mit einem im vorderen Endbereich des Wischerarmes beweglich gelagerten Wischerblatt, wobei im vorderen Endbereich des Wischerarmes ein eine Querbohrung aufweisender Lagerblock eingesteckt ist. Die Erfindung betrifft weiters auch eine Scheibenwischeranlage, bei der gemäß dem Oberbegriff des Anspruchs 2 zusätzlich ein mit einem Antriebselement versehener Haltebügel des Wischerblattes im Lagerblock parallel zur Schwenkachse drehbar gelagert und mittels eines vom Schwenkantrieb des Wischerarmes abgeleiteten Drehantrieb verdrehbar ist, der ein zum Antriebselement geführtes Übertragungselement aufweist.

Einfache Scheibenwischer weisen häufig einen Wischerarm auf, der am vorderen Ende zu einem etwa U-förmigen Haken zurückgebogen ist. Der Haken umfaßt den Lagerblock, in dem das Wischerblatt beweglich angeordnet ist.

Eine weitere Scheibenwischeranlage der eingangs genannten Art, bei der das Wischerblatt nicht eine bloße Schwenkbewegung sondern eine komplexere Bewegung ausführt, ist beispielsweise aus der DE-B 10 39 380 bekannt. Diese zeigt einen aus zwei Blechschalen gebildeten Lagerblock mit Querbohrung, der im vorderen Endbereich des Wischerarmes durch einen O-Ring oder durch eine Materialverformung gehalten ist. Eine Schubstange mit anschließender Zahnstange dient als Übertragungselement für die Drehbewegung durch den Wischerarm, wobei zwischen den beiden entweder ein hammerkopfartiger Formschluß oder eine Schraubverbindung vorgesehen ist. Beide Verbindungen erlauben es nicht, den Lagerblock auf den Wischerarm einfach aufzustecken, sondern es müssen zuerst alle Innenteile eingesetzt werden, bevor der Lagerblock montiert werden kann.

Die Erfindung hat es sich zur Aufgabe gestellt, bei einer Scheibenwischeranlage eine einfache, gleichartige Montage des Wischerblattlagers an einem Wischerarm mit oder ohne Drehantrieb zu ermöglichen.

Erfindungsgemäß wird dies dadurch erreicht, daß der Endbereich des Wischerarmes eine mit der Querbohrung des Lagerblockes fluchtende Querbohrung aufweist, und daß auf dem vorderen Endbereich des Wischerarmes eine Abdeckung vorgesehen ist, die einen in beide Querbohrungen eingreifenden Haltezapfen aufweist.

Wenn das Wischerblatt einen vom Schwenkantrieb abgeleiteten Drehantrieb aufweist und im Wischerarm das Übertragungselement angeordnet ist, so ist nach einer Weiterbildung gemäß Anspruch 2 vorgesehen, daß das Antriebselement und das Übertragungselement in Steckrichtung des Lagerblockes ineinander schiebbar ausgebildet sind. Der Wischerarm weist bevorzugt ein Hohlprofil auf, durch das das Übertragungselement zum Wischerblattdrehlager geführt ist.

In beiden Fällen ist so ein sehr einfaches Ein- bzw. Aufstecken des Wischerblattlagers auf den Wischerarm möglich, wobei eine Verbindung zu einem Drehantrieb nicht eigens hergestellt werden muß. Es genügt, den Lagerblock am Wischerarm mittels der Abdeckung mechanisch zu fixieren. Besonders vorteilhaft ist es dabei, wenn die Abdeckung auf dem vorderen Endbereich des Wischerarmes verrastet.

Im Fall eines Drehantriebs kann der Lagerblock einen wischerarmseitig offenen Schlitz aufweisen, in dem das mit einem Lagerzapfen verbundene Antriebselement angeordnet ist. Das Antriebselement weist insbesondere eine gebogene Verzahnung auf, in die ein Ritzel des Übertragungselementes des Drehantriebs eingreift.

Die kraftschlüssige Verbindung zwischen dem Antriebselement und dem Übertragungselement kann auch in anderer Weise erfolgen, beispielsweise durch eine stirnseitige Umfangsverzahnung des Fortsatzes des Antriebselementes, die mit einem beispielsweise über einen Seilzug angetriebenen Zahnrad od.dgl. zusammenwirkt.

Nachstehend wird nun die Erfindung anhand der Figuren der beiliegenden Zeichnungen näher beschrieben, ohne darauf beschränkt zu sein.

Es zeigen:
Fig. 1 einen Längsschnitt durch das das Wischerblatt tragende Ende eines Wischerarmes nach der Linie I-I von Fig. 2,
Fig. 2 einen Schnitt nach der Linie II-II von Fig. 1,
Fig. 3 einen Schnitt nach der Linie III-III von Fig. 1 und
Fig. 4 einen Längsschnitt gemäß Fig. 1 durch eine zweite Ausführung ohne Drehantrieb.

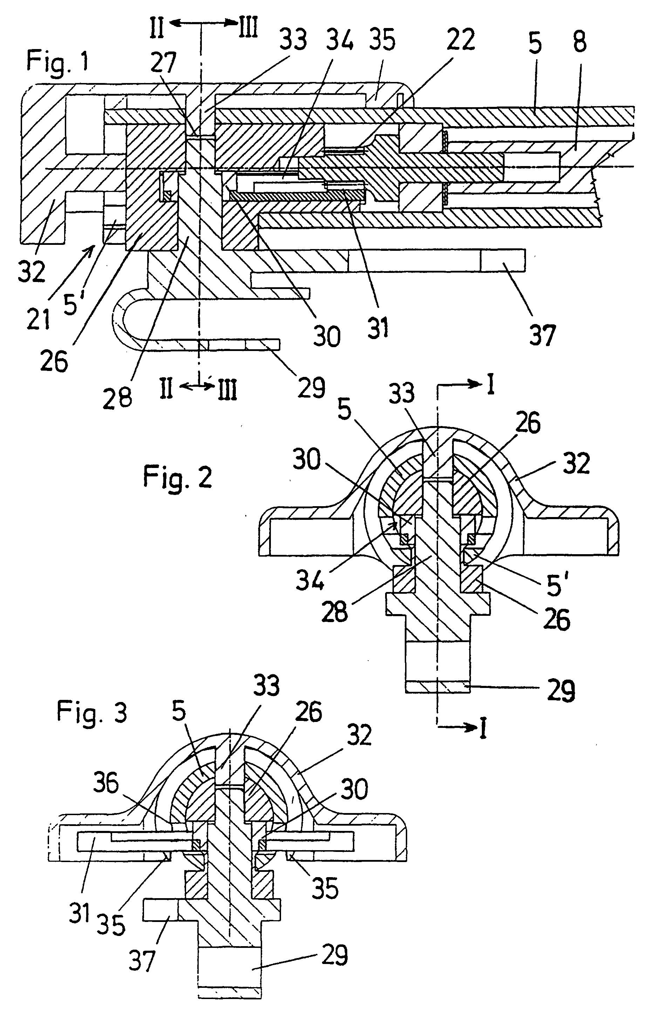

Das vordere Ende eines schwenkbaren Wischerarmes weist ein Hohlprofil 5 auf, und ist mit einem Wischerblattdrehlager 21 versehen, zu dem ein Übertragungselement 8 eines vom Schwenkantrieb des Wischerarmes abgeleiteten Drehantriebs durch das Hohlprofil 5 zugeführt ist. Das Übertragungselement 8 endet mit einem Ritzel 22. Das Hohlprofil 5 weist einen endseitig offenen Schlitz- an der Unterseite und zwei einander gegenüberliegende ennseitig offene, seitliche Schlitze auf, die in den beiden unteren Vierteln des Hohlprofiles 5 ausgebildet sind, sodaß zwei Stege 5' verbleiben. Ein Lagerblock 26 des Wischerblattdrehlagers 21 ist endseitig in das Hohlprofil 5 eingeschoben und weist einen durch den Schlitz an der Unterseite vorstehenden Führungs- und Anschlagbereich auf. In der Höhe der beiden seitlichen Schlitze ist im Lagerblock 26 ein Schlitz 34 vorgesehen, der an der Seite des Ritzels 22 offen ist, und ein Antriebselement 30 aufnimmt. Der Lagerblock 26 weist weiters eine Querbohrung 27 auf, die den Schlitz 34 durchsetzt und in der ein Lagerzapfen 28 drehbar gelagert ist auf dem im Schlitz 34 das Antriebselement 30 fixiert ist, und der einen Haltebügel 29 für das Wischerblatt sowie einen abstehenden Steg mit einer Nase 37 trägt. Das Antriebselement 30 weist eine auf dem Lagerzapfen 28 angeordnete Hülse, sowie einen radial abstehenden Fortsatz mit der annähernden Form eines Kreisausschnittes auf, dessen Zentriwinkel etwa dem Schwenkwinkel des Wischerarmes entspricht Der Fortsatz steht, wie in Fig. 3 ersichtlich, durch die beiden seitlichen Schlitze des Hohlprofiles 5 nach außen. Entlang des Randes des Fortsatzes ist eine bogenförmige Verzahnung 31 vorgesehen, in die das Ritzel 22 des Übertragungselementes 8 des Drehantriebes eingreift. Der Lagerzapfen 28 und das Antriebselement 30 sind vorzugsweise miteinander verpreßt, wobei die beiden Teile insbesondere einen unrunden. beispielsweise vier- oder sechskantigen Querschnitt aufweisen, sodaß sich zusätzlich ein Formschluß in Umfangsrichtung ergibt

Die Montage des Wischerarmdrehlagers 21 auf dem Wischerarm ist äußerst einfach: Nach dem Fixieren des Antriebselementes 30 auf dem Lagerzapfen 28 im Lagerblock 26 wird der Lagerblock 26 von vome in das Hohlprofil 5 eingeschoben, wobei das Ritzel 22 sich in die bogenförmige Verzahnung 31 einschiebt. Der Lagerblock 26 wird in der eingeschobenen Stellung, in der die kraftschlüssige Verbindung zwischen dem Ritzel 22 und dem Antriebselement 30 gegeben ist, durch eine Abdeckung 32 ergänzt die mit federnden Rastelementen 35 und einem Haltezapfen 33 versehen ist. In Verlängerung der Bohrung 27 des Lagerblockes 26 ist auch an der Oberseite des Hohlprofiles 5 eine Bohrung ausgebildet. Die Abdeckung 32 kann nun von oben aufgesetzt werden, wobei der Haltezapfen 33 in die Bohrung 27 eindringt und dadurch den Lagerblock 26 im Hohlprofil 5 fixiert, und wobei die gebogenen Rastelemente 35 das Hohlprofil 5 von beiden Seiten umgreifen und an den Kanten 36 der Seitenschlitze verrasten.

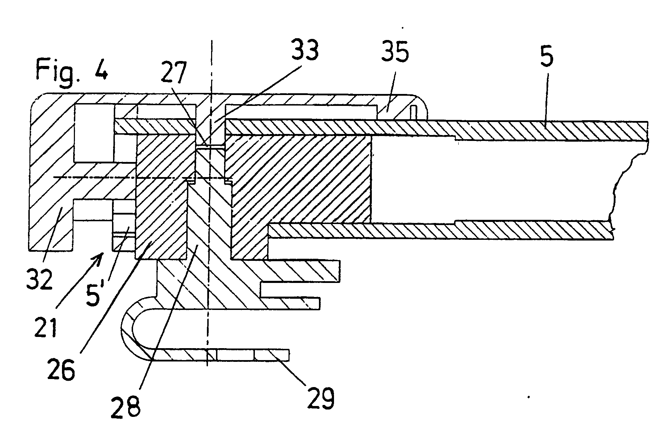

In der ohne Drehantrieb ausgestatteten Ausführung nach Fig. 4 ist die gleiche Montageart gegeben: Der mit dem Haltebügel 29 versehene Lagerblock 26 wird in das Hohlprofil 5 eingesteckt und durch die Abdeckung 32 fixiert, deren Haltezapfen 33 in die Bohrung 27 eingreift.

## Patentansprüche

1. Scheibenwischeranlage mit einem schwenkbaren Wischerarm und mit einem im vorderen Endbereich des Wischerarmes beweglich gelagerten Wischerblatt, wobei im vorderen Endbereich des Wischerarmes ein eine Querbohrung (27) aufweisender Lagerblock (26) eingesteckt ist, **dadurch gekennzeichnet, daß** der Endbereich des Wischerarmes eine mit der Querbohrung des Lagerblockes (26) fluchtende Querbohrung aufweist, und daß auf dem vorderen Endbereich des Wischerarmes eine Abdeckung (32) vorgesehen ist, die einen in beide Querbohrungen eingreifenden Haltezapfen (33) aufweist.

2. Scheibenwischeranlage nach Anspruch 1, bei der ein mit einem Antriebselement (30) versehener Haltebügel (29) des Wischerblattes im Lagerblock (26) parallel zur Schwenkachse drehbar gelagert und mittels eines vom Schwenkantrieb des Wischerarmes abgeleiteten Drehantrieb verdrehbar ist, der ein zum Antriebselement (30) geführtes Übertragungselement (8) aufweist, **dadurch gekennzeichnet, daß** das Antriebselement (30) und das Übertragungselement (8) in Steckrichtung des Lagerblockes (26) ineinander schiebbar ausgebildet sind.

3. Scheibenwischeranlage nach Anspruch 2, **dadurch gekennzeichnet, daß** der Lagerblock (26) einen wischerarmseitig offenen Schlitz (34) aufweist, in dem das mit einem Lagerzapfen (28) verbundene Antriebselement (30) angeordnet ist.

4. Scheibenwischeranlage nach Anspruch 3, **dadurch gekennzeichnet, daß** das Antriebselement (30) eine gebogene Verzahnung (31) aufweist, in die ein Ritzel (22) des Übertragungselementes (8) des Drehantriebes eingreift.

5. Scheibenwischeranlage nach einem der Ansprüche 1 bis 4, **dadurch gekennzeichnet, daß** die Abdeckung (32) auf dem vorderen Endbereich des Wischerarmes verrastet ist.

## Claims

1. A screen wiper arrangement comprising a pivotable wiper arm and a wiper blade mounted movably in the front end region of the wiper arm, wherein a mounting block (26) having a transverse bore (27) is fitted in the front end region of the wiper arm, **characterised in that** the end region of the wiper arm has a transverse bore aligned with the transverse bore of the mounting block (26) and that provided on the front end region of the wiper arm is a cover (32) having a holding projection (33) engaging into both transverse bores.

2. A screen wiper arrangement according to claim 1 wherein a holding loop (29) of the wiper blade, which holding loop is provided with a drive element (30), is mounted rotatably in the mounting block (26) in parallel relationship with the pivot axis and is rotable by means of a rotary drive which is derived from the pivoting drive of the wiper arm and which has a transmission element (8) passed to the drive element (30), **characterised in that** the drive element (30) and the transmission element (8) are adapted to be displaceable one into the other in the direction of fitting of the mounting block (26).

3. A screen wiper arrangement according to claim 2 **characterised in that** the mounting block (26) has a slot (34) which is open at the wiper arm side and in which is arranged the drive element (30) which is connected to a mounting trunnion (28).

4. A screen wiper arrangement according to claim 3 **characterised in that** the drive element (30) has a curved tooth arrangement (31) into which engages a pinion (22) of the transmission element (8) of the rotary drive.

5. A screen wiper arrangement according to one of claims 1 to 4 **characterised in that** the cover (32) is latched on the front end region of the wiper arm.

## Revendications

1. Système d'essuie-glace comportant un bras d'essuie-glace pivotant et un balai d'essuie-glace monté mobile dans la zone terminale avant du bras d'essuie-glace, un bloc de support (26), comportant un perçage transversal (27), étant emmanché dans la zone terminale avant du bras d'essuie-glace, **caractérisé en ce que** la zone terminale du bras d'essuie-glace comporte un perçage transversal aligné avec le perçage transversal du bloc de support (26) et qu'un dispositif de recouvrement (32), qui comporte un axe de retenue (33) s'engageant dans les deux perçages transversaux, est prévu sur la zone terminale avant du bras d'essuie-glace.

2. Système d'essuie-glace selon la revendication 1, dans lequel un étrier de retenue (29) du balai d'essuie-glace équipé d'un élément d'entraînement (30) est monté dans le bloc de support (26) avec possibilité de rotation parallèlement à l'axe de pivotement et peut être entraîné en rotation au moyen d'un mécanisme de rotation qui est dérivé du mécanisme de pivotement du bras d'essuie-glace et comporte un élément de transmission (8) guidé vers l'élément d'entraînement (30), **caractérisé en ce que** l'élément d'entraînement (30) et l'élément de transmission (8) sont réalisés de façon à pouvoir coulisser l'un dans l'autre dans la direction d'emmanchement du bloc de support (26).

3. Système d'essuie-glace selon la revendication 2, **caractérisé en ce que** le bloc de support (26) comporte une fente (34) ouverte côté bras d'essuie-glace dans laquelle est disposé l'élément d'entraînement (30) lié à un axe de montage (28).

4. Système d'essuie-glace selon la revendication 3, **caractérisé en ce que** l'élément d'entraînement (30) comporte une denture (31) courbe avec laquelle engrène un pignon (22) de l'élément de transmission (8) du mécanisme de rotation.

5. Système d'essuie-glace selon l'une des revendications 1 à 4, **caractérisé en ce que** le dispositif de recouvrement (32) est enclenché sur la zone terminale avant du bras d'essuie-glace.
